# EUROPÄISCHE PATENTSCHRIFT

(11) **EP 4 130 687 B1**
(45) Veröffentlichungstag und Bekanntmachung des Hinweises auf die Patenterteilung: **30.08.2023**
(21) Anmeldenummer: 22181446.0
(22) Anmeldetag: 28.06.2022
(51) Int. Cl.: G01F 1/66, G01F 1/667, G01F 1/684, G01F 1/69

(54) **DURCHFLUSSMESSSYSTEM**
FLOW MEASURING SYSTEM
SYSTÈME DE DÉBITMÈTRE

(30) Priorität: 05.08.2021 DE 102021120363
(43) Veröffentlichungstag der Anmeldung: 08.02.2023
(73) Patentinhaber: SICK Engineering GmbH, 01458 Ottendorf-Okrilla (DE)
(72) Erfinder: KLEMM, Markus, 01458 Ottendorf-Okrilla (DE); STARKE, Eric, 01458 Ottendorf-Okrilla (DE); KÜNZELMANN, Mario, 01458 Ottendorf-Okrilla (DE)
(74) Vertreter: Manitz Finsterwald Patent- und Rechtsanwaltspartnerschaft mbB

(56) Entgegenhaltungen:
- WO-A1-2020/210355
- CN-U- 209 069 358
- KR-B1- 101 865 801
- US-A- 5 661 236
- US-A1- 2012 055 263
- US-B2- 9 556 798
- US-B2- 10 101 186

## Beschreibung

Die vorliegende Erfindung betrifft ein Durchflussmesssystem zur Messung eines Fluiddurchflusses durch ein Rohr.

Durchflussmesssysteme werden in vielen Bereichen der Technik dazu eingesetzt, um die pro Zeiteinheit durch ein Rohr, eine Leitung, einen Kanal oder dergleichen strömende Menge eines Gases oder einer Flüssigkeit zu bestimmen. Beispielsweise dienen Durchflussmesssysteme in Form von Zählern dazu, Liefer- und/oder Verbrauchsmengen von Gasen oder Flüssigkeiten zu ermitteln.

Die Genauigkeit von Durchflussmessungen hängt im Allgemeinen von der Gleichmäßigkeit des Strömungsprofils ab. In der Praxis liegen häufig inhomogene oder gestörte Strömungsprofile vor, was die Zuverlässigkeit der Messungen beeinträchtigt. Es besteht daher das Bestreben, Durchflussmesssysteme mit erhöhter Genauigkeit und Robustheit bereitzustellen. Da Durchflussmesssysteme in vielen Anwendungsbereichen einem beträchtlichen Kostendruck unterliegen, sind aufwändige Maßnahmen jedoch unerwünscht.

Es ist eine Aufgabe der Erfindung, ein Durchflussmesssystem anzugeben, das bei konstruktiv einfachem Aufbau und geringen Herstellungskosten eine hohe Messgenauigkeit selbst bei vorhandenen Ungleichmäßigkeiten des Strömungsprofils aufweist.

Die Lösung der Aufgabe erfolgt durch ein Durchflussmesssystem mit den Merkmalen des Anspruchs 1.

Ein erfindungsgemäßes Durchflussmesssystem umfasst eine erste Messanordnung, die wenigstens zwei Ultraschallwandler umfasst und dazu ausgebildet ist, anhand von Laufzeiten von mit und gegen die Strömung ausgesandten und empfangenen Ultraschallsignalen einen Wert für den Fluiddurchfluss durch das Rohr zu ermitteln, eine zweite Messanordnung, die mehrere über den Querschnitt des Rohrs verteilt angeordnete Hitzdraht-Sensoren umfasst, die jeweils zum Ermitteln eines lokalen Strömungswerts ausgebildet sind, und eine Auswerteeinrichtung, die mit der ersten Messanordnung und mit der zweiten Messanordnung in Signalverbindung steht und dazu ausgebildet ist, auf Grundlage der durch die Hitzdraht-Sensoren ermittelten lokalen Strömungswerte ein Strömungsprofil zu ermitteln und den von der ersten Messanordnung ermittelten Wert für den Fluiddurchfluss auf Grundlage des ermittelten Strömungsprofils zu modifizieren.

Mittels der verteilt angeordneten Hitzdraht-Sensoren ist es möglich, Ungleichmäßigkeiten und/oder zeitliche Änderungen des Strömungsprofils zu erkennen und bei der Ermittlung des Fluiddurchflusses zu berücksichtigen. Die Auswerteeinrichtung kann also den ermittelten Wert für den Fluiddurchfluss bei Bedarf korrigieren, woraus eine besonders robuste und exakte Messung resultiert. Ein Vorteil der Verwendung von Hitzdraht-Sensoren zum Ermitteln des Strömungsprofils besteht darin, dass diese relativ klein, kostengünstig und einfach auszuwerten sind. Insbesondere ist es nicht erforderlich, für die Hitzdraht-Sensoren eine komplexe Signalverarbeitung bereitzustellen. Temperatur- oder Druckänderungen im Rohr beeinflussen die Messung nicht nennenswert, weil der absolute Wert für den Fluiddurchfluss durch das Rohr mittels der ultraschallbasierten ersten Messanordnung bestimmt wird. Die zweite Messanordnung muss dagegen keine exakten absoluten Werte liefern, weil für die Ermittlung des Strömungsprofils lediglich die Verhältnisse der einzelnen Signale der Hitzdraht-Sensoren zueinander maßgeblich sind. Somit ermöglicht die erfindungsgemäße Kombination aus ultraschallbasierter Absolutwert-Messung und hitzdrahtbasierter Profilerkennung eine exakte und zuverlässige Durchflussmessung trotz einfachem und platzsparendem Messaufbau.

Bei dem Fluiddurchfluss kann es sich um den Volumenstrom oder um den Massenstrom, insbesondere bezogen auf den gesamten Rohrquerschnitt, oder um einen hierzu proportionalen Wert handeln. Die Hitzdraht-Sensoren können als lokalen Strömungswert beispielsweise die lokale Strömungsgeschwindigkeit des Fluids erfassen.

Hitzdraht-Sensoren sind Anemometer, die ein von dem Fluid umströmbares Hitzdraht-Element umfassen. Durch die Umströmung findet ein Wärmetransport in das Fluid statt, dessen Ausmaß von der lokalen Strömungsgeschwindigkeit abhängt. Da die elektrischen Eigenschaften des Hitzdrahts, beispielsweise der elektrische Widerstand, temperaturabhängig sind, kann über eine einfache elektrische Messung auf die lokale Strömungsgeschwindigkeit geschlossen werden. Der Hitzdraht kann zum Beispiel zwischen zwei Stahlspitzen gespannt und/oder in einem keramischen Halter gehalten sein. Hitzdraht-Anemometer werden auch Hot-Wire-Anemometer oder gegebenenfalls Hot-Nano-Wire-Anemometer genannt. Im Allgemeinen werden auch Heizelemente als "Hitzdraht" bezeichnet, die nicht im klassischen Sinne drahtartig sind. Beispielsweise sind Anemometer bekannt, die flache, filmartige Heizelemente aufweisen. In der vorliegenden Offenbarung sollen unter dem Begriff "Hitzdraht" auch solche Heizelemente zu verstehen sein.

Die erste Messanordnung kann dafür ausgelegt sein, den Wert für den Fluiddurchfluss mittels des Differenzlaufzeitverfahrens zu ermitteln. Eine entsprechende Ultraschallmessvorrichtung und ein entsprechendes Verfahren sind beispielsweise in der DE 10 2016 112 295 A1**,** und in der WO 2020/210355 A1 offenbart. Je nach Anwendung kann die erste Messanordnung ein Einpfadsystem oder ein Mehrpfadsystem aus Ultraschallwandlern umfassen. Vorzugsweise ist die Auswerteeinrichtung dazu ausgebildet, den gleichzeitig mit den lokalen Strömungswerten ermittelten Wert für den Fluiddurchfluss auf Grundlage des ermittelten Strömungsprofils zu modifizieren. Es wird also derjenige Wert für den Fluiddurchfluss modifiziert, welcher zum Zeitpunkt der Strömungsprofil-Ermittlung bestimmt wurde. Somit ist sichergestellt, dass zeitliche Änderungen des Strömungsprofils korrekt berücksichtigt werden.

Der von der ersten Messanordnung ermittelte Wert für den Fluiddurchfluss kann auf Grundlage des ermittelten Strömungsprofils modifiziert werden, indem er mit einem Korrekturfaktor multipliziert wird, der auf dem ermittelten Strömungsprofil beruht. Beispielsweise kann der Korrekturfaktor auf einem Verhältnis zwischen einem Mittelwert aller lokalen Strömungswerte und dem lokalen Strömungswert einer Referenzstelle beruhen.

Gemäß einer Ausführungsform der Erfindung ist die zweite Messanordnung bezüglich der Strömungsrichtung und/oder der Achse des Rohrs von der ersten Messanordnung beabstandet. Somit können beide Messanordnungen den vollständigen Rohrquerschnitt für die Messung nutzen. Vorzugsweise ist die zweite Messanordnung stromaufwärts der ersten Messanordnung angeordnet.

Die Hitzdraht-Sensoren der zweiten Messanordnung können an einem gemeinsamen Träger angebracht sein. Dies erleichtert eine exakte Positionierung der Hitzdraht-Sensoren relativ zueinander und relativ zur Wand des Rohrs. Der Träger kann hierbei an der Rohrwand befestigt oder einstückig mit dieser ausgebildet sein.

Gemäß einer Ausgestaltung der Erfindung ist der Träger aus flächigen Strömungsleitabschnitten zusammengesetzt. Dies ist insofern vorteilhaft, als die Strömungsleitabschnitte einer Beunruhigung der Strömung entgegenwirken. Vorzugsweise sind die Strömungsleitabschnitte zumindest im Wesentlichen glatt und/oder erstrecken sich entlang der Strömungsrichtung.

Der Träger kann als Strömungsgleichrichter ausgeführt sein, wodurch gestörte Strömungsprofile, insbesondere an einer stromaufwärts der ersten Messanordnung befindlichen Stelle, wieder in Richtung ungestörter Strömungen konditioniert werden. Der als Strömungsgleichrichter ausgeführte Träger kann Platten, Bleche, Innenrohre und dergleichen aufweisen, die in Richtung einer ungestörten Strömung ausgerichtet sind. Auf diese Weise kann insbesondere einem unerwünschten Drall in der Strömung erfolgreich entgegengewirkt werden. Da der Träger eine Doppelfunktion als Halter für die Hitzdraht-Sensoren und als Strömungsgleichrichter erfüllt, weist ein entsprechendes Durchflussmesssystem eine besonders kompakte Bauform auf.

Eine weitere Ausführungsform der Erfindung sieht vor, dass die wenigstens zwei Ultraschallwandler der ersten Messanordnung einen bezüglich der Strömungsrichtung schräg verlaufenden Messpfad definieren. Bei einer derartigen Anordnung ergibt sich eine von der Strömungsgeschwindigkeit abhängige Laufzeitdifferenz zwischen Ultraschallsignalen auf dem Hinweg einerseits und auf dem Rückweg andererseits. Beispielsweise können die wenigstens zwei Ultraschallwandler der ersten Messanordnung mit aufeinander zu weisenden Messköpfen an einer Innenwand des Rohrs angeordnet sein. Grundsätzlich kann sich der Messpfad auch in Strömungsrichtung erstrecken.

Vorzugsweise sind die wenigstens zwei Ultraschallwandler der ersten Messanordnung jeweils zum Aussenden und zum Empfangen von Ultraschallsignalen ausgebildet. Der zwischen den Ultraschallwandlern ausgebildete Messpfad kann somit sowohl in der einen Richtung wie in der anderen Richtung durchlaufen werden.

Die Hitzdraht-Sensoren der zweiten Messanordnung können mikro-elektro-mechanische Systeme (MEMS) umfassen. Beispielsweise kann der Hitzdraht gemeinsam mit zugehörigen elektrischen Komponenten auf bzw. an einem Substrat aufgebracht sein. Eine Durchbrechung oder Aussparung des Substrats kann die Umströmung unterstützen. Auf MEMS beruhende Hitzdraht-Anemometer sind einfach und kostengünstig in der Herstellung. Zudem sind sie miniaturisierbar und ermöglichen so eine besonders exakte Messung der lokalen Strömungsgeschwindigkeit.

Gemäß einer weiteren Ausführungsform der Erfindung sind die Hitzdraht-Sensoren der zweiten Messanordnung an eine gemeinsame Leiterplatte angeschlossen oder in diese integriert. Dies ermöglicht eine besonders einfache Konstruktion eines Durchflussmesssystems. Auf die gemeinsame Leiterplatte können auch eine Verstärkerschaltung, eine Treiberschaltung und/oder eine Auswertungsschaltung aufgebracht sein.

Ein erfindungsgemäßes Durchflussmesssystem kann eine dritte Messanordnung umfassen, die bezüglich der Strömungsrichtung und/oder der Achse des Rohrs von der zweiten Messanordnung beabstandet ist und mehrere über den Querschnitt des Rohrs verteilt angeordnete Hitzdraht-Sensoren umfasst, die jeweils zum Ermitteln eines lokalen Strömungswerts des Fluids ausgebildet sind, wobei die Auswerteeinrichtung mit der dritten Messanordnung in Signalverbindung steht und dazu ausgebildet ist, anhand eines Vergleichs von Signalen der zweiten und dritten Messanordnung Veränderungen des Strömungsprofils entlang der Strömungsrichtung zu ermitteln. Auf diese Weise können auch Änderungen des Strömungsprofils berücksichtigt werden, die zwischen der ersten Messanordnung und der zweiten Messanordnung oder innerhalb der Messstrecke der ersten Messanordnung entstehen.

Eine weitere Ausführungsform der Erfindung sieht vor, dass die Auswerteeinrichtung dazu ausgebildet ist, auf Grundlage des ermittelten Strömungsprofils die Viskosität des Fluids zu ermitteln. Die zweite Messanordnung kann also dazu genutzt werden, zusätzliche Informationen über die Fluidströmung zu erlangen.

Ein erfindungsgemäßes Durchflussmesssystem kann ein Temperaturmessgerät umfassen, wobei die Auswerteeinrichtung mit dem Temperaturmessgerät in Signalverbindung steht und dazu ausgebildet ist, den von der ersten Messanordnung ermittelten Wert für den Fluiddurchfluss auf Grundlage einer von dem Temperaturmessgerät erfassten Temperatur zu modifizieren. Die Messgenauigkeit kann hierdurch weiter gesteigert werden.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte seitliche Schnittansicht eines erfindungsgemäßen Durchflussmesssystems.
- Fig. 2: zeigt das Durchflussmesssystem gemäß Fig. 1 in einer Vorderansicht.

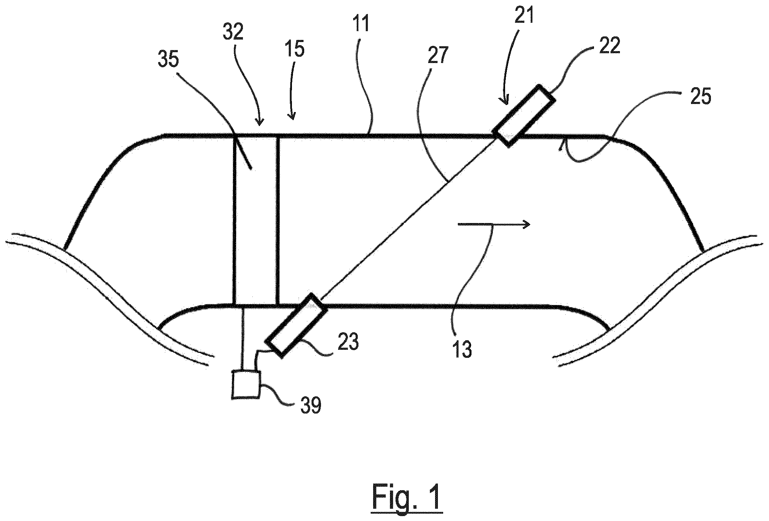

In den Fig. 1 ist ein Rohr 11 gezeigt, das von einem Fluid in einer Strömungsrichtung 13 durchströmbar ist. Das Rohr 11 kann Teil eines Leitungs- oder Kanalsystems sein. Dem Rohr 11 ist ein erfindungsgemäßes Durchflussmesssystem 15 zur Messung des Fluiddurchflusses durch das Rohr 11 zugeordnet. Das Durchflussmesssystem 15 umfasst eine erste Messanordnung 21, die zwei Ultraschallwandler 22, 23 umfasst und dazu ausgebildet ist, anhand von Laufzeiten von mit und gegen die Strömung ausgesandten und empfangenen Ultraschallsignalen einen Wert für den Fluiddurchfluss durch das Rohr 11 zu ermitteln. Bei dem dargestellten Ausführungsbeispiel sind die beiden Ultraschallwandler 22, 23 an einer Wand 25 des Rohrs 11 befestigt und definieren einen bezüglich der Strömungsrichtung 13 schräg verlaufenden Messpfad 27. Die zwei Ultraschallwandler 22, 23 sind jeweils zum wechselweisen Aussenden und Empfangen Ultraschallsignalen ausgebildet und mit einer nicht dargestellten elektronischen Auswerteeinheit verbunden, welche sowohl das Aussenden der Ultraschallsignale steuern kann als auch empfangene Ultraschallsignale auswerten kann. Aus einer Differenz der Laufzeiten der Ultraschallsignale für Hin- und Rückweg des Messpfads 27 kann die Auswerteeinheit der ersten Messanordnung 21 unter Berücksichtigung der geometrischen Verhältnisse einen Wert für den Fluiddurchfluss durch das Rohr 11, insbesondere einen Volumenstrom oder Massenstrom, ermitteln. Im Einzelnen kann die erste Messanordnung 21 wie in der DE 10 2016 112 295 A1 beschrieben gestaltet sein.

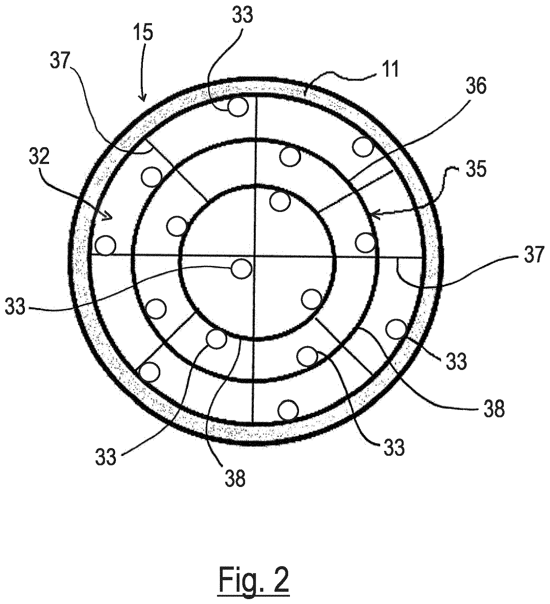

Stromaufwärts der ersten Messanordnung 21 ist eine zweite Messanordnung 32 des Durchflussmesssystems 15 vorgesehen. Die zweite Messanordnung 32 umfasst wie in Fig. 2 erkennbar ein Array aus Hitzdraht-Sensoren 33, die über den Querschnitt des Rohrs 11 verteilt angeordnet sind. Die Hitzdraht-Sensoren 33 sind zum Beispiel als mikro-elektro-mechanische Systeme (MEMS) ausgeführt. Sie stehen jeweils in Signalverbindung mit einer nicht gezeigten Auswerteeinheit der zweiten Messanordnung 32.

Zur Positionierung der Hitzdraht-Sensoren 33 der zweiten Messanordnung 32 ist ein Träger 35 aus Kunststoff, Faserverbundstoff oder Metall vorgesehen, der auch als Strömungsgleichrichter fungiert. Für eine Konditionierung der Strömung ist der Träger 35 aus flächigen Strömungsleitabschnitten 36 zusammengesetzt. Wie dargestellt sind sowohl ebene Strömungsleitabschnitte 37 als auch gekrümmte Strömungsleitabschnitte 38 vorhanden. Die Hitzdraht-Sensoren 33 sind jeweils an den Strömungsleitabschnitten 36 befestigt, beispielsweise an diesen angeklebt.

Das Durchflussmesssystem 15 umfasst weiterhin eine elektronische Auswerteeinrichtung 39, die mit jeweiligen Auswerteeinheiten der ersten Messanordnung 21 und der zweiten Messanordnung 32 in drahtloser oder drahtgebundener Signalverbindung steht und dazu ausgebildet ist, anhand von Ausgangssignalen der Hitzdraht-Sensoren 33 ein Strömungsprofil der Fluidströmung zu ermitteln und den von der ersten Messanordnung 21 ermittelten Wert für den Fluiddurchfluss anhand dieses Strömungsprofils zu korrigieren. Hierfür kann der Wert für den Fluiddurchfluss beispielsweise mit einem Korrekturfaktor multipliziert werden, welcher eine mittlere Strömung im Verhältnis zur lokalen Strömung an einer Referenzposition angibt. Der mit dem Korrekturfaktor multiplizierte Wert wird von dem Durchflussmesssystem 15 als Messwert ausgegeben.

Die elektronische Auswerteeinrichtung 39 kann ferner dazu ausgebildet sein, aus dem ermittelten Strömungsprofil zusätzliche Größen abzuleiten, beispielsweise die Viskosität des Fluids. Um die Messgenauigkeit zu erhöhen, kann das Durchflussmesssystem 15 mit einem Temperaturmessgerät versehen sein, wobei die elektronische Auswerteeinrichtung 39 dazu ausgebildet ist, Messwertverfälschungen aufgrund von Temperaturänderungen zu kompensieren. Um auch Änderungen des Strömungsprofils auf dem Weg von der zweiten Messanordnung 32 zur ersten Messanordnung 21 oder im Verlauf des Messpfads 27 der ersten Messanordnung 21 berücksichtigen zu können, könnte auch ein weiterer Träger mit Hitzdraht-Sensoren stromabwärts der ersten Messanordnung 21 vorgesehen sein.

Die vorzugsweise auf eine einzelne Leiterplatte aufgebrachte Auswerteeinrichtung 39 kann relativ einfach gestaltet sein, weil zum Beispiel zur Ermittlung des Strömungsprofils mittels der Hitzdraht-Sensoren 33 keine komplexe Signalverarbeitung notwendig ist. Ein erfindungsgemäßes Durchflussmesssystem 15 ist auch bei Rohren 11 mit kleinen Nenndurchmessern geeignet, weil aufgrund der separaten Ermittlung des Strömungsprofils nur eine begrenzte Zahl von Messpfaden 27 des Ultraschallsystems, im Idealfall nur ein einziger Messpfad 27, erforderlich ist, um auch bei ungleichmäßiger Strömung eine akzeptable Messgenauigkeit zu erzielen. Dadurch dass der Basiswert für den Fluiddurchfluss auf eine Ultraschallmessung zurückgeht, ist die Messung robuster als dies mit einem reinen Hitzdraht-System möglich wäre.

### Bezugszeichenliste

- 11: Rohr
- 13: Strömungsrichtung
- 15: Durchflussmesssystem
- 21: erste Messanordnung
- 22: Ultraschallwandler
- 23: Ultraschallwandler
- 25: Wand
- 27: Messpfad
- 32: zweite Messanordnung
- 33: Hitzdraht-Sensor
- 35: Träger
- 36: Strömungsleitabschnitt
- 37: ebener Strömungsleitabschnitt
- 38: gekrümmter Strömungsleitabschnitt
- 39: elektronische Auswerteeinrichtung

## Patentansprüche

1. Durchflussmesssystem (15) zur Messung eines Fluiddurchflusses durch ein Rohr (11) mit
einer ersten Messanordnung (21), die wenigstens zwei Ultraschallwandler (22, 23) umfasst und dazu ausgebildet ist, anhand von Laufzeiten von mit und gegen die Strömung ausgesandten und empfangenen Ultraschallsignalen einen Wert für den Fluiddurchfluss durch das Rohr (11) zu ermitteln,
einer zweiten Messanordnung (32), die mehrere über den Querschnitt des Rohrs (11) verteilt angeordnete Hitzdraht-Sensoren (33) umfasst, die jeweils zum Ermitteln eines lokalen Strömungswerts ausgebildet sind, und
einer Auswerteeinrichtung (39), die mit der ersten Messanordnung (21) und mit der zweiten Messanordnung (32) in Signalverbindung steht, **dadurch gekennzeichnet, dass** die Auswerteeinrichtung dazu ausgebildet ist, auf Grundlage der durch die Hitzdraht-Sensoren (33) ermittelten lokalen Strömungswerte ein Strömungsprofil zu ermitteln und den von der ersten Messanordnung (21) ermittelten Wert für den Fluiddurchfluss auf Grundlage des ermittelten Strömungsprofils zu modifizieren.

2. Durchflussmesssystem nach Anspruch 1,
wobei die Auswerteeinrichtung (39) dazu ausgebildet ist, den gleichzeitig mit den lokalen Strömungswerten ermittelten Wert für den Fluiddurchfluss auf Grundlage des ermittelten Strömungsprofils zu modifizieren.

3. Durchflussmesssystem nach Anspruch 1 oder 2,
wobei die zweite Messanordnung (32) bezüglich der Strömungsrichtung (13) und/oder der Achse des Rohrs (11) von der ersten Messanordnung (21) beabstandet ist.

4. Durchflussmesssystem nach einem der vorstehenden Ansprüche,
wobei die Hitzdraht-Sensoren (33) der zweiten Messanordnung (32) an einem gemeinsamen Träger (35) angebracht sind.

5. Durchflussmesssystem nach Anspruch 4,
wobei der Träger (35) aus flächigen Strömungsleitabschnitten (36) zusammengesetzt ist.

6. Durchflussmesssystem nach Anspruch 4 oder 5,
wobei der Träger (35) als Strömungsgleichrichter ausgeführt ist.

7. Durchflussmesssystem nach einem der vorstehenden Ansprüche,
wobei die wenigstens zwei Ultraschallwandler (22, 23) der ersten Messanordnung (21) einen bezüglich der Strömungsrichtung (13) schräg verlaufenden Messpfad (27) definieren.

8. Durchflussmesssystem nach einem der vorstehenden Ansprüche,
wobei die wenigstens zwei Ultraschallwandler (22, 23) der ersten Messanordnung (21) jeweils zum Aussenden und zum Empfangen von Ultraschallsignalen ausgebildet sind.

9. Durchflussmesssystem nach einem der vorstehenden Ansprüche,
wobei die Hitzdraht-Sensoren (33) der zweiten Messanordnung (32) mikro-elektro-mechanische Systeme (MEMS) umfassen.

10. Durchflussmesssystem nach einem der vorstehenden Ansprüche,
wobei die Hitzdraht-Sensoren (33) der zweiten Messanordnung (32) an eine gemeinsame Leiterplatte angeschlossen oder in diese integriert sind.

11. Durchflussmesssystem nach einem der vorstehenden Ansprüche,
umfassend eine dritte Messanordnung, die bezüglich der Strömungsrichtung (13) und/oder der Achse des Rohrs (11) von der zweiten Messanordnung (32) beabstandet ist und mehrere über den Querschnitt des Rohrs (11) verteilt angeordnete Hitzdraht-Sensoren (33) umfasst, die jeweils zum Ermitteln eines lokalen Strömungswerts des Fluids ausgebildet sind, wobei die Auswerteeinrichtung (39) mit der dritten Messanordnung in Signalverbindung steht und dazu ausgebildet ist, anhand eines Vergleichs von Signalen der zweiten und dritten Messanordnung Veränderungen des Strömungsprofils entlang der Strömungsrichtung (13) zu ermitteln.

12. Durchflussmesssystem nach einem der vorstehenden Ansprüche,
wobei die Auswerteeinrichtung (39) dazu ausgebildet ist, auf Grundlage des ermittelten Strömungsprofils die Viskosität des Fluids zu ermitteln.

13. Durchflussmesssystem nach einem der vorstehenden Ansprüche,
umfassend ein Temperaturmessgerät, wobei die Auswerteeinrichtung (39) mit dem Temperaturmessgerät in Signalverbindung steht und dazu ausgebildet ist, den von der ersten Messanordnung (21) ermittelten Wert für den Fluiddurchfluss auf Grundlage einer von dem Temperaturmessgerät erfassten Temperatur zu modifizieren.

## Claims

1. A throughflow measurement system (15) for measuring a fluid throughflow through a pipe (11) comprising
a first measurement arrangement (21) which comprises at least two ultrasonic transducers (22, 23) and which is configured to determine a value for the fluid throughflow through the pipe (11) on the basis of transit times of ultrasonic signals transmitted and received with and against the flow;
a second measurement arrangement (32) which comprises a plurality of hot-wire sensors (33) which are arranged distributed over the cross-section of the pipe (11) and which are each configured to determine a local flow value; and
an evaluation device (39) which is in signal connection with the first measurement arrangement (21) and with the second measurement arrangement (32), **characterized in that** the evaluation device is configured to determine a flow profile on the basis of the local flow values determined by the hot-wire sensors (33) and to modify the value for the fluid throughflow, which is determined by the first measurement arrangement (21), on the basis of the determined flow profile.

2. A throughflow measurement system in accordance with claim 1,
wherein the evaluation device (39) is configured to modify the value for the fluid throughflow, which is determined simultaneously with the local flow values, on the basis of the determined flow profile.

3. A throughflow measurement system in accordance with claim 1 or claim 2, wherein the second measurement arrangement (32) is spaced apart from the first measurement arrangement (21) with respect to the direction of flow (13) and/or the axis of the pipe (11).

4. A throughflow measurement system in accordance with any one of the preceding claims,
wherein the hot-wire sensors (33) of the second measurement arrangement (32) are attached to a common carrier (35).

5. A throughflow measurement system in accordance with claim 4,
wherein the carrier (35) is composed of areal flow-conducting sections (36).

6. A throughflow measurement system in accordance with claim 4 or claim 5, wherein the carrier (35) is designed as a flow conditioner.

7. A throughflow measurement system in accordance with any one of the preceding claims,
wherein the at least two ultrasonic transducers (22, 23) of the first measurement arrangement (21) define a measurement path (27) extending obliquely with respect to the direction of flow (13).

8. A throughflow measurement system in accordance with any one of the preceding claims,
wherein the at least two ultrasonic transducers (22, 23) of the first measurement arrangement (21) are each configured to transmit and to receive ultrasonic signals.

9. A throughflow measurement system in accordance with any one of the preceding claims,
wherein the hot-wire sensors (33) of the second measurement arrangement (32) comprise microelectromechanical systems (MEMS).

10. A throughflow measurement system in accordance with any one of the preceding claims,
wherein the hot-wire sensors (33) of the second measurement arrangement (32) are connected to or integrated into a common circuit board.

11. A throughflow measurement system in accordance with any one of the preceding claims,
comprising a third measurement arrangement which is spaced apart from the second measurement arrangement (32) with respect to the direction of flow (13) and/or the axis of the pipe (11) and which comprises a plurality of hot-wire sensors (33) which are arranged distributed over the cross-section of the pipe (11) and which are each configured to determine a local flow value of the fluid, wherein the evaluation device (39) is in signal connection with the third measurement arrangement and is configured to determine changes in the flow profile along the direction of flow (13) on the basis of a comparison of signals of the second and third measurement arrangement.

12. A throughflow measurement system in accordance with any one of the preceding claims,
wherein the evaluation device (39) is configured to determine the viscosity of the fluid on the basis of the determined flow profile.

13. A throughflow measurement system in accordance with any one of the preceding claims,
comprising a temperature measurement device, wherein the evaluation device (39) is in signal connection with the temperature measurement device and is configured to modify the value for the fluid throughflow, which is determined by the first measurement arrangement (21), on the basis of a temperature detected by the temperature measurement device.

## Revendications

1. Système de mesure de débit (15) pour mesurer un débit de fluide à travers un tube (11), comprenant
un premier ensemble de mesure (21) qui comprend au moins deux transducteurs à ultrasons (22, 23) et qui est réalisé pour déterminer une valeur pour le débit de fluide à travers le tube (11) à l'aide des temps de propagation des signaux ultrasonores émis et reçus dans le sens de l'écoulement et en sens opposé,
un deuxième ensemble de mesure (32) qui comprend plusieurs capteurs à fil chaud (33) répartis sur la section transversale du tube (11), qui sont réalisés chacun pour déterminer une valeur d'écoulement locale, et
un dispositif d'évaluation (39) qui est en liaison de signalisation avec le premier ensemble de mesure (21) et avec le deuxième ensemble de mesure (32),
**caractérisé en ce que**
le dispositif d'évaluation est réalisé pour déterminer un profil d'écoulement en se basant sur des valeurs d'écoulement locales déterminées par les capteurs à fil chaud (33) et pour modifier la valeur déterminée par le premier ensemble de mesure (21) pour le débit de fluide en se basant sur le profil d'écoulement déterminé.

2. Système de mesure de débit selon la revendication 1,
dans lequel le dispositif d'évaluation (39) est réalisé pour modifier la valeur du débit de fluide déterminée simultanément avec les valeurs d'écoulement locales en se basant sur le profil d'écoulement déterminé.

3. Système de mesure de débit selon la revendication 1 ou 2,
dans lequel le deuxième ensemble de mesure (32) est espacé du premier ensemble de mesure (21) par rapport à la direction d'écoulement (13) et/ou à l'axe du tube (11).

4. Système de mesure de débit selon l'une des revendications précédentes, dans lequel les capteurs à fil chaud (33) du deuxième ensemble de mesure (32) sont montés sur un support commun (35).

5. Système de mesure de débit selon la revendication 4,
dans lequel le support (35) est composé de portions de guidage d'écoulement planes (36).

6. Système de mesure de débit selon la revendication 4 ou 5,
dans lequel le support (35) est conçu comme un redresseur de flux.

7. Système de mesure de débit selon l'une des revendications précédentes, dans lequel lesdits au moins deux transducteurs à ultrasons (22, 23) du premier ensemble de mesure (21) définissent un chemin de mesure (27) s'étendant en oblique par rapport à la direction d'écoulement (13).

8. Système de mesure de débit selon l'une des revendications précédentes, dans lequel lesdits au moins deux transducteurs à ultrasons (22, 23) du premier ensemble de mesure (21) sont réalisés chacun pour émettre et recevoir des signaux ultrasonores.

9. Système de mesure de débit selon l'une des revendications précédentes, dans lequel les capteurs à fil chaud (33) du deuxième ensemble de mesure (32) comprennent des systèmes micro-électromécaniques (MEMS).

10. Système de mesure de débit selon l'une des revendications précédentes, dans lequel les capteurs à fil chaud (33) du deuxième ensemble de mesure (32) sont connectés à une carte de circuit imprimé commune ou sont intégrés dans celle-ci.

11. Système de mesure de débit selon l'une des revendications précédentes, comprenant un troisième ensemble de mesure qui est espacé du deuxième ensemble de mesure (32) par rapport à la direction d'écoulement (13) et/ou à l'axe du tube (11) et qui comprend plusieurs capteurs à fil chaud (33) répartis sur la section transversale du tube (11), qui sont réalisés chacun pour déterminer une valeur d'écoulement locale du fluide, le dispositif d'évaluation (39) étant en liaison de signalisation avec le troisième ensemble de mesure et étant réalisé pour déterminer, à l'aide d'une comparaison de signaux du deuxième et du troisième ensemble de mesure, des modifications du profil d'écoulement le long de la direction d'écoulement (13).

12. Système de mesure de débit selon l'une des revendications précédentes, dans lequel le dispositif d'évaluation (39) est réalisé pour déterminer la viscosité du fluide en se basant sur le profil d'écoulement déterminé.

13. Système de mesure de débit selon l'une des revendications précédentes, comprenant un appareil de mesure de température, le dispositif d'évaluation (39) étant en liaison de signalisation avec l'appareil de mesure de température et étant réalisé pour modifier la valeur déterminée par le premier ensemble de mesure (21) pour le débit de fluide en se basant sur une température détectée par l'appareil de mesure de température.
